# EUROPÄISCHE PATENTSCHRIFT

(11) **EP 0 901 707 B1**
(45) Veröffentlichungstag und Bekanntmachung des Hinweises auf die Patenterteilung: **11.06.2003**
(21) Anmeldenummer: 98905247.7
(22) Anmeldetag: 13.01.1998
(51) Int. Cl.: H02K 5/24, F04D 29/66, F16F 15/073

(54) **HALTEVORRICHTUNG FÜR EINEN ELEKTROMOTOR**
RETAINING DEVICE FOR AN ELECTRIC MOTOR
DISPOSITIF DE RETENUE POUR MOTEUR ELECTRIQUE

(30) Priorität: 21.02.1997 DE 19706852
(43) Veröffentlichungstag der Anmeldung: 17.03.1999
(73) Patentinhaber: ROBERT BOSCH GMBH, 70442 Stuttgart (DE)
(72) Erfinder: SCHEIDEL, Wolfgang, D-77815 Bühl (DE); FRÖHLICH, Peter, D-77815 Bühl (DE); BERNAUER, Christof, D-76596 Forbach (DE); BERTOLINI, Thomas, D-77866 Rheinau (DE); EITEL, Christoph, D-77855 Achern (DE); FÖRSTERA, Josef, D-77830 Bühlertal (DE); NOLTING, Peter, D-77830 Bühlertal (DE); AGNON, Reuben, D-77880 Sasbach (DE); BRASS, Otto, D-77815 Bühl (DE); MAIER, Alfred, D-77855 Achern (DE)
(86) Internationale Anmeldenummer: DE9800097
(87) Internationale Veröffentlichungsnummer: WO98037612

(56) Entgegenhaltungen:
- DE-A- 4 306 588
- DE-A- 4 307 778
- DE-A- 4 321 633
- DE-A- 19 504 970
- DE-C- 4 240 776
- US-A- 4 988 069

## Beschreibung

Die Erfindung geht aus von einer Haltevorrichtung für einen Elektromotor nach der Gattung des Hauptanspruchs.

Es ist schon eine Haltevorrichtung für einen Elektromotor bekannt (US-PS 4,063,060), bei der drei drehflexible blattfederartige Haltearme vorgesehen sind, die um gleiche Umfangswinkel zueinander versetzt strahlenförmig zwischen Elektromotor und Aufnahmegehäuse gespannt sind und jeweils mit ihrem einen Ende starr am Elektromotor befestigt und mit ihrem anderen Ende unter Zwischenschaltung elastischer Puffer an einem mit dem Aufnahmegehäuse fest verbundenen Einlaßkragen angebunden sind. Diese Haltearme bewirken eine elastische Anbindung des Elektromotors an das Aufnahmegehäuse und dämpfen somit die Übertragung von Laufgeräuschen und laufbedingten Schwingungen des Gebläses auf das Aufnahmegehäuse, z. B. hervorgerufen durch Unwucht im Gebläserad, so daß eine wesentliche Reduktion der Lärmentwicklung erreicht wird. Durch die in einer Ebene erfolgende Dreipunktaufhängung des Elektromotors und die geringe Federkonstante der Haltearme in Torsionsrichtung führt der Motor relativ große Schwingungen und Kippbewegungen aus, die in den elastischen Elementen, insbesondere in den Puffern, Scherkräfte hervorrufen, die schnell zu Materialermüdung und zu Beschädigungen führen. Die Lebensdauer dieser bekannten Haltevorrichtung ist daher relativ begrenzt und nicht ausreichend für den Einsatz in Kraftfahrzeugen, bei denen die elastischen Elemente auch noch Schwingungen aufnehmen müssen, die durch Fahrbahnstöße an dem Elektromotor hervorgerufen werden.

Bei einer derartigen Haltevorrichtung nach der US-PS 4,161,667 haben die blattfederartigen Haltearme zwischen ihren beiden Enden jeweils einen Axialabschnitt, der in Richtung der Motordrehachse verläuft.

Bekannt ist ebenfalls eine Haltevorrichtung
(DE 91 08 745 U1) mit einem Aufnahmegehäuse, in dessen Aufnahmeöffnung ein Motorgehäuse eines Elektromotors ragt. Auf das Motorgehäuse ist mit radialem Abstand eine Zwischenbuchse aufgeschoben und mittels Federzungen festgehalten. Zwischen Aufnahmegehäuse und Zwischenbuchse ist ein aus Kunststoff bestehender Haltekörper eingespannt, der mit einem umlaufenden Ringteil am Aufnahmegehäuse und der Zwischenbuchse angreift und dessen drei vom Ringteil ausgehende und sich axial erstreckende Armteile am Aufnahmegehäuse anliegen und mit einem radialen Endabschnitt an der Zwischenbuchse angreifen.

Bekannt ist durch die DE 27 27 119 A1 weiterhin eine Haltevorrichtung, bei der federelastische Halteelemente an ihrem einen Ende mit einem rohrförmigen Haltering verbunden sind, der kraftschlüssig am Motorgehäuse angreift.

Der Erfindung liegt die Aufgabe zugrunde, eine Haltevorrichtung zu schaffen, bei der die Geräuschentkopplung des Elektromotors so tieffrequent erfolgt, daß die Resonanzfrequenz des aus dem Elektromotor und der Haltevorrichtung gebildeten Feder-Masse-Systems unterhalb der zu entkoppelnden Frequenzen des Elektromotors liegt, wobei es auch bei der rauhen Betriebsweise im Kraftfahrzeug zu keiner übermäßigen Belastung der Haltevorrichtung kommt und damit eine lange Lebensdauer der Haltevorrichtung garantiert ist.

Diese Aufgabe wird durch die Merkmale des Hauptanspruchs gelöst.

Durch die Anordnung eines Anschlagelementes im Bereich jedes Halteelementes, das die Amplitude der Schwingungsbewegung der Halteelemente gegenüber dem Aufnahmegehäuse begrenzt, wird sichergestellt, daß im Resonanzfall, z. B. beim Start des Elektromotors sowie bei seinem Abstellen oder bei Beschleunigungen von außen durch Schläge und Stöße die maximal mögliche Auslenkung des Elektromotors gegenüber dem Aufnahmegehäuse begrenzt und dadurch eine Überbeanspruchung der Haltevorrichtung ausgeschlossen wird.

Durch die in den Unteransprüchen aufgeführten Maßnahmen sind vorteilhafte Weiterbildungen und Verbesserungen der im Hauptanspruch angegebenen Haltevorrichtung möglich.

Vorteilhaft ist, daß durch die Anordnung von zwei einander zugewandten Anschlagflächen die Amplitude der Torsionsbewegung der Halteelemente gegenüber dem Aufnahmegehäuse bei einer Drehrichtung im Uhrzeigersinn oder gegen den Uhrzeigersinn begrenzt wird.

Vorteilhaft ist ebenfalls, daß die beiden in Richtung der Drehbewegung einander gegenüberliegenden Anschlagflächen der Anschlagelemente derart verlaufen, insbesondere gewölbt verlaufen, daß bei einer Schwingungsbewegung ein dem ersten Ende des Halteelementes zugewandter erster Abschnitt des Axialabschnittes bei einer größeren Amplitude zur Anlage an eine der Anschlagflächen gelangt, als ein dem zweiten Ende zugewandter zweiter Abschnitt, wodurch sich die Federrate der Halteelemente mit zunehmender Auslenkung insbesondere progressiv erhöht und damit die Resonanzüberhöhung reduziert wird. Vorteilhaft ist es ebenfalls, die Axialabschnitte der Halteelemente mit einem rechteckförmigen Querschnitt auszubilden und den Axialabschnitt durch eine Verschränkung in einen ersten Teilabschnitt, der dem ersten Ende zugewandt ist, und einen zweiten Teilabschnitt, der dem zweiten Ende zugewandt ist, zu unterteilen, wobei im ersten Teilabschnitt die Querseiten und im zweiten Teilabschnitt die Längsseiten des rechteckförmigen Querschnittes dem Motorgehäuse und dem Aufnahmegehäuse gegenüberliegen, wodurch durch diese Änderung der Geometrie der Halteelemente die Federrate der Halteelemente in verschiedenen Richtungen (axial, radial, in Torsionsrichtung) geändert werden kann und eine Anpassung der Federeigenschaften der Halteelemente zur Entkopplung der in verschiedenen Richtungen auftretenden Schwingungen möglich ist.

Weiterhin vorteilhaft ist die Ausbildung einer Queranschlagsfläche am Anschlagelement, die im Bereich des zweiten Endes des Halteelementes ausgebildet ist und zum ersten Ende hin verlaufend einen sich verringernden Abstand zum Halteelement hat, um die maximale Schwingungsamplitude der Halteelemente in radialer Richtung zu begrenzen.

Die einstückige Ausbildung der Anschlagelemente am Aufnahmegehäuse ist insofern vorteilhaft, als keine zusätzlichen Montageschritte für die Montage der Anschlagelemente erforderlich sind, während die Ausbildung der Anschlagelemente als eigenständiges Teil den Vorteil mit sich bringt, daß bei einer gewünschten Änderung der Anschlaggeometrie keine Änderungen an Werkzeugen zur Herstellung des Aufnahmegehäuses erforderlich sind.

Die Ausbildung des topfförmigen Aufnahmegehäuses mit einem Zylinderteil und einem Bodenteil sowie die Verbindung der axial zur Motordrehachse verlaufenden Halteelemente mit einem rohrförmigen Haltering und einer Haltescheibe ermöglichen eine besonders kompakte Ausgestaltung der Haltevorrichtung.

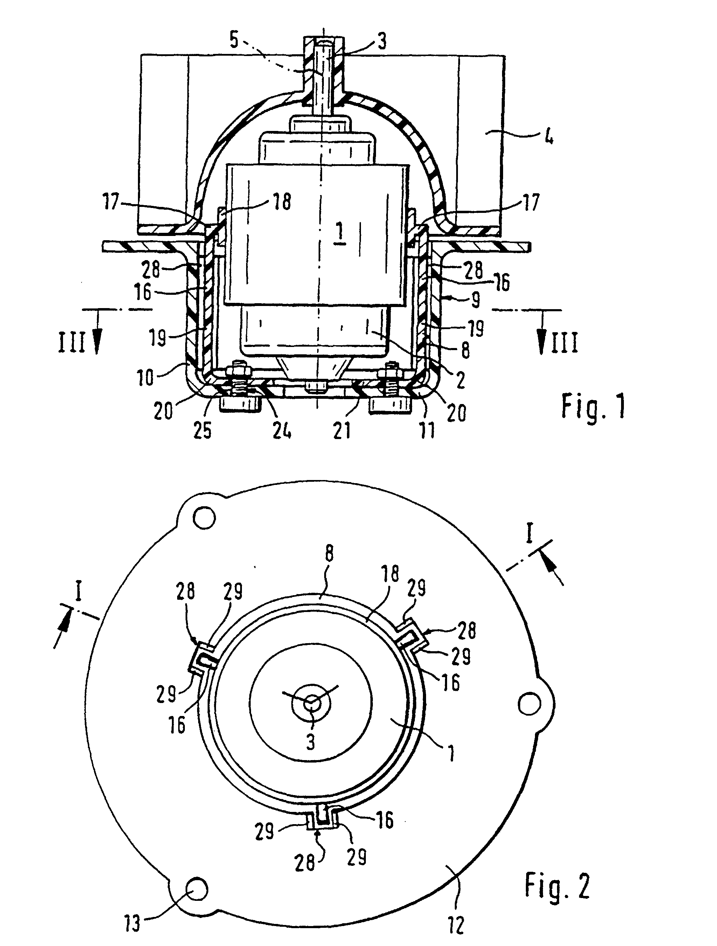

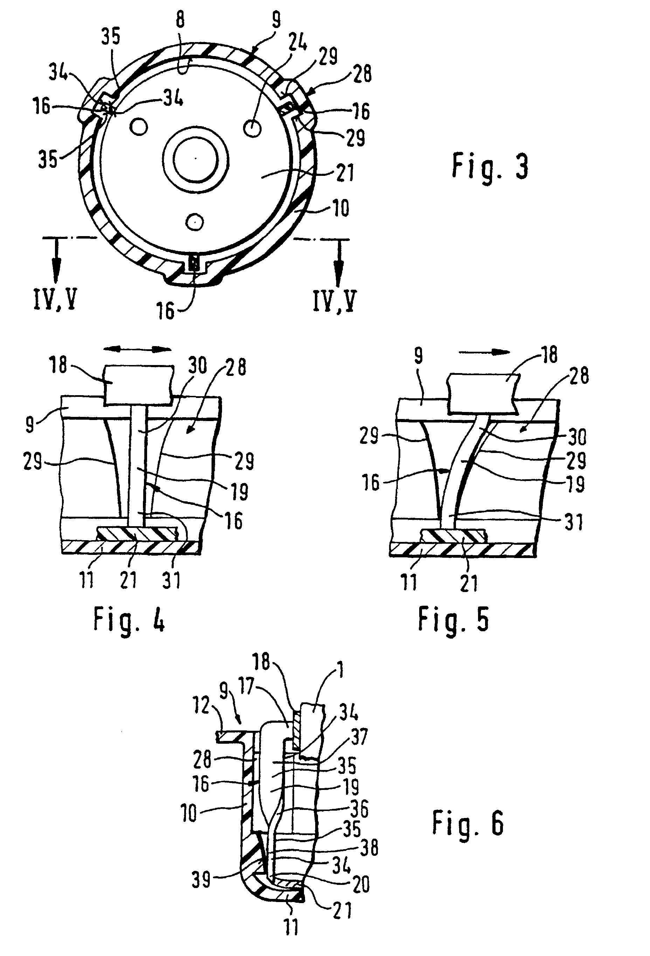

Ausführungsbeispiele der Erfindung sind in der Zeichnung vereinfacht dargestellt und in der nachfolgenden Beschreibung näher erläutert. Es zeigen Figur 1 eine Haltevorrichtung mit einem Elektromotor entlang der Linie I-I in Figur 2, Figur 2 eine Draufsicht auf eine Haltevorrichtung mit einem Elektromotor, Figur 3 einen Schnitt entlang der Linie III-III in Figur 1, Figur 4 einen Schnitt entlang der Linie IV-IV in Figur 3, Figur 5 einen Schnitt entlang der Linie V-V in Figur 3, Figur 6 eine Teilansicht einer Haltevorrichtung mit einem in radialer Richtung wirkenden Anschlagelement.

In der Figur 1 ist ein Elektromotor 1 dargestellt, der insbesondere als Gebläsemotor in einem Kraftfahrzeug dient.

Der Elektromotor 1 hat eine aus einem Motorgehäuse 2 ragende Welle 3, die mit einem Lüfterrad 4 verbunden und um eine Motordrehachse 5 drehbar gelagert ist. Das Motorgehäuse 2 ragt wenigstens teilweise in eine Aufnahmeöffnung 8 eines topfförmig ausgebildeten Aufnahmegehäuses 9, das ein ringförmiges Zylinderteil 10 und ein sich in radialer Richtung erstreckendes Bodenteil 11 hat. Wie auch in der eine Draufsicht ohne Lüfterrad zeigenden Figur 2 erkennbar ist, besitzt das Aufnahmegehäuse 9 an seinem dem Bodenteil 11 abgewandten Ende einen von dem ringförmigen Zylinderteil 10 ausgehenden und sich radial nach außen erstreckenden Halteflansch 12 mit Befestigungsöffnungen 13 für eine nicht dargestellte Befestigung des Aufnahmegehäuses 9 mittels Schrauben im Kraftfahrzeug.

Das koaxial zur Motordrehachse 5 verlaufende Motorgehäuse 2 ragt mit einem radialen Abstand in die Aufnahmeöffnung 8 des Aufnahmegehäuses 9. In diesen durch den radialen Abstand gebildeten ringförmigen Zwischenraum zwischen dem Umfang des Motorgehäuses 2 und der Wandung der Aufnahmeöffnung 8 erstrecken sich wenigstens drei mit in Umfangsrichtung zueinander einen Abstand aufweisenden federelastische Halteelemente 16 frei beweglich, die mit ihren gemäß der Darstellung in Figur 1 obenliegenden ersten Enden 17 mit einem rohrförmigen Haltering 18 verbunden sind, der den Umfang des Motorgehäuses 2 umgreift und an dem Motorgehäuse 2 beispielsweise durch Aufschrumpfen, Verkleben, Vernieten, Verschrauben oder ähnliches befestigt ist. Ausgehend von dem ersten Ende 17 erstreckt sich bei der Darstellung nach Figur 1 ein Axialabschnitt 19 des Halteelementes 16 nach unten bis zu einem zweiten Ende 20, das jeweils mit einer Haltescheibe 21 verbunden ist, die sich parallel zum Bodenteil 11 des Aufnahmegehäuses 9 radial nach innen erstreckt. Die Haltescheibe 21 weist wie auch das Bodenteil 11 Durchgangsöffnungen 24 auf, durch die Schrauben 25 gesteckt sind, um die Haltescheibe 21 am Bodenteil 11 zu fixieren.

Die federelastisch ausgebildeten Halteelemente 16 haben beispielsweise einen rechteckförmigen Querschnitt und verlaufen mit ihrem Axialabschnitt 19 derart in Richtung der Motordrehachse 5, daß in Ruhelage des Elektromotors 1 die Axialabschnitte 19 sowohl in radialer Richtung als auch in Umfangsrichtung gegenüber der Aufnahmeöffnung 8 des Aufnahmegehäuses 9 und dem Motorgehäuse 2 einen radialen Abstand haben und auch in Umfangsrichtung eine freie Bewegung ausführen können. Die beispielsweise drei um 120° zueinander versetzt angeordneten Halteelemente 16 bilden zusammen mit dem Haltering 18, der Haltescheibe 21 und dem Aufnahmegehäuse 9 eine Haltevorrichtung für den Elektromotor 1, die eine Torsionsbewegung des Elektromotors 1 gegenüber dem Aufnahmegehäuse 2 zuläßt. Aufnahmegehäuse 9 und Halteelemente 16 sind beispielsweise aus Kunststoff gefertigt, wobei Halteelemente 16, Haltering 18 und Haltescheibe 21 einstückig an einem Bauteil ausgebildet sind. Die federelastischen Halteelemente 16 bilden zusammen mit dem Elektromotor 1 ein sogenanntes Feder-Masse-Schwingsystem, das bei Erregung des Elektromotors 1 in Torsionsschwingungen versetzt wird, die zu unerwünschten Geräuschen im Kraftfahrzeug führen. Die Federrate der Halteelemente 16 ist so gewählt, daß sich unter Berücksichtigung der Masse des Elektromotors 1 eine tieffrequente (beispielsweise 10 Hz) Resonanzfrequenz ergibt. Bei einem Antrieb des Elektromotors beispielsweise mit 50 Hz liegen dann die zu entkoppelnden störenden Schwingungen im sogenannten überkritischen Bereich weit oberhalb dieser Resonanzfrequenz und werden optimal zum Kraftfahrzeug hin entkoppelt. Dabei ergibt sich eine Torsionsbewegung des Elektromotors 1 um die zweiten Enden 2C der Halteelemente 16.

Es gibt nun aber Betriebszustände, z. B. bei Beschleunigungen von außen durch Stöße und Schläge beim Betrieb des Kraftfahrzeuges oder beim Anlaufen oder Auslaufen des Elektromotors 1, bei denen die Eigenresonanzfrequenz des aus den Halteelementen 16 und dem Elektromotor 1 bestehenden Feder-Masse-Schwingungssystems durchlaufen wird, wobei es unter Geräuschentwicklung zu großen Torsionsamplituden kommen kann, die auch Beschädigungen nach sich ziehen können. Es ist deshalb im Bereich jedes Halteelementes 16 am Aufnahmegehäuse 9 ein Anschlagelement 28 angeordnet, das die Amplitude der Torsionsbewegung der Halteelemente 16 gegenüber dem Aufnahmegehäuse 9 mit zwei einander zugewandten Anschlagflächen 29 bei einer Drehrichtung in Uhrzeigersinn oder gegen den Uhrzeigersinn begrenzt. Dabei können die Anschlagelemente 28 einstückig als U-förmige Aussparungen in der Aufnahmeöffnung 8 des Aufnahmegehäuses 9 ausgebildet sein, als Teil des Aufnahmegehäuses 9, oder die Anschlagelemente 28 können als einzelne separate U-förmige Teile in der Aufnahmeöffnung 8 des Aufnahmegehäuses 9 angeordnet und an diesem befestigt sein. Wie in Figur 4 dargestellt ist, verlaufen die Anschlagflächen 29 der Anschlagelemente 28 so, daß die beiden einander zugewandten Anschlagflächen 29 im Bereich des zweiten Endes 20 des Axialabschnittes 19 der Halteelemente 16 einen geringeren Abstand haben, als im Bereich des ersten Endes 17 der Halteelemente 16, so daß bei einer Schwingungsbewegung ein dem ersten Ende 17 des Halteelementes 16 zugewandter erster Abschnitt 30 des Axialabschnittes 19 bei einer größeren Amplitude zur Anlage an die Anschlagfläche 29 gelangt, als ein dem zweiten Ende 20 zugewandter zweiter Abschnitt 31 des Axialabschnittes 19. Die Anordnung von Anschlagelementen 28 mit Anschlagflächen 29 gewährleistet somit einen Schutz der Haltevorrichtung im Resonanzfall oder bei Einwirkungen von außen, da die Halteelemente 16 beim Auftreten derartiger Bedingungen bei einer Torsionsbewegung sanft von den Anschlagflächen 29 aufgefangen und vor einer zerstörenden Überlastung geschützt werden. Bei dem Ausführungsbeispiel nach Figur 5 ist die Kontur der beiden Anschlagflächen 29 eines Anschlagelementes 28 derart gewölbt, daß sie dem ersten Ende 17 des Halteelementes 16 zugewandt einen größeren Abstand zueinander haben als dem zweiten Ende 20 des Halteelementes zugewandt, wobei der Verlauf der Kontur jeder Anschlagfläche 29 so gewählt ist, daß der zweite Abschnitt 31 des Axialabschnittes 19 bereits bei einer geringen Amplitude der Torsionsbewegung zur Anlage an der Anschlagfläche 29 gelangt, so daß die Federrate bzw. die Federsteifigkeit des ersten Abschnittes 30, der noch eine größere Amplitude der Torsionsbewegung bis zur Anlage an der Anschlagfläche 29 ausführen kann, sich vergrößert und insbesondere einen progressiv zunehmenden Verlauf hat. Damit kann die Federungseigenschaft der Halteelemente 16 und die maximal mögliche Auslenkung des Elektromotors 1 bei einer Torsionsbewegung optimal ausgelegt werden, um eine Überlastung der Haltevorrichtung zu vermeiden.

Wie in Figur 3 dargestellt ist, haben die Halteelemente 16 einen rechteckförmigen Querschnitt mit zwei schmalen Querseiten 34, die dem Aufnahmegehäuse 9 sowie dem Motorgehäuse 2 zugewandt sind und zwei längeren Längsseiten 35, die jeweils einer der Anschlagflächen 29 des Anschlagelementes 28 zugewandt sind, sich also in radialer Richtung erstrecken. Die Halteelemente 16, der Haltering 18 und die Haltescheibe 21 können, wie bereits ausgeführt wurde, aus Kunststoff gefertigt sein, sie können jedoch auch als Einzelteile aus Metall gefertigt sein, wie es in Figur 6 dargestellt ist, und anschließend durch Verschweißen oder Verlöten zusammengefügt sein. Eine Änderung der Federgeometrie des Halteelementes 16 in verschiedenen Richtungen ist durch Änderung der Querschnittsgeometrie des Halteelementes 16 erreichbar. Hierzu wird beispielsweise das mit einem rechteckförmigen Querschnitt ausgebildete Halteelement 16 in seinem Axialabschnitt 19 mit einer Verschränkung 36 versehen, die den Axialabschnitt in einen ersten Teilabschnitt 37, der dem ersten Ende 17 zugewandt ist, und einen dem zweiten Ende 20 zugewandten zweiten Teilabschnitt 38 unterteilt. Dabei liegen im ersten Teilabschnitt 37 die Querseiten 34 und im zweiten Teilabschnitt 38 die Längsseiten 35 dem Motorgehäuse 2 und dem Aufnahmegehäuse 9 gegenüber, wodurch der zweite Teilabschnitt des Halteelementes 16 in radialer Richtung federnd gestaltet ist, während der erste Teilabschnitt 37 federnd Torsionsbewegungen ermöglicht. Die in Figur 6 vorgesehene Verschränkung 36 ist unabhängig von der Materialwahl bei aus Kunststoff oder aus Metall gefertigten Halteelementen 16 ausbildbar. Zur Begrenzung der radialen Amplitude des Halteelementes 16 ist beispielsweise am Anschlagselement 28 eine dem Motorgehäuse 2 zugewandte Queranschlagfläche 39 ausgebildet, die beispielsweise im Bereich des zweiten Teilabschnitts 38 verläuft und einen sich in Richtung vom ersten Ende 17 zum zweiten Ende 20 des Halteelementes 16 hin gegenüber dem Halteelement 16 verringernden Abstand hat.

## Patentansprüche

1. Haltevorrichtung für einen Elektromotor, insbesondere einen Elektromotor für ein Gebläse, mit einem Aufnahmegehäuse (9), das eine Aufnahmeöffnung (8) hat, in die ein zu einer Motordrehachse (5) koaxial verlaufendes Motorgehäuse (2) des Elektromotors (1) mit radialem Abstand zum Aufnahmegehäuse (9) wenigstens teilweise ragt und mit wenigstens drei mit Abstand zueinander angeordneten federelastischen Halteelementen (16), die jeweils ein erstes Ende (17) und ein zweites Ende (20) haben, wobei die Halteelemente (16) mit ihren ersten Enden (17) mit dem Motorgehäuse (2) und mit ihren zweiten Enden (20) mit dem Aufnahmegehäuse (9) in Verbindung stehen und eine Schwingungsbewegung des Elektromotors (1) gegenüber dem Aufnahmegehäuse (9) zulassen, **dadurch gekennzeichnet, daß** für jedes Halteelement (16) am Aufnahmegehäuse (9) ein Anschlagelement (28) im Bereich des Halteelements (16) angeordnet ist, das die Amplitude einer Schwingungsbewegung des Elektromotors (1) gegenüber dem Aufnahmegehäuse (9) begrenzt.

2. Haltevorrichtung nach Anspruch 1, **dadurch gekennzeichnet, daß** das Anschlagelement (28) zwei einander zugewandte Anschlagflächen (29) hat, die bei einer Drehrichtung im Uhrzeigersinn oder gegen den Uhrzeigersinn eine Torsionsbewegung des Elektromotors (1) begrenzen.

3. Haltevorrichtung nach Anspruch 2, **dadurch gekennzeichnet, daß** die Halteelemente (16) zwischen dem ersten Ende (17) und dem zweiten Ende (20) wenigstens einen Axialabschnitt (19) haben, der in Richtung der Motordrehachse (5) verläuft und die Anschlagflächen (29) derart verlaufen, daß bei einer Torsionsbewegung ein dem ersten Ende (17) des Halteelementes (16) zugewandter erster Abschnitt (30) des Axialabschnittes (19) bei einer größeren Amplitude zur Anlage an die Anschlagfläche (29) gelangt, als ein dem zweiten Ende (20) zugewandter zweiter Abschnitt (31) des Axialabschnittes (19).

4. Haltevorrichtung nach Anspruch 3, **dadurch gekennzeichnet, daß** die beiden einander zugewandten Anschlagflächen (29) des Anschlagelementes (28) derart gewölbt verlaufen, daß sie dem ersten Ende (17) des Halteelementes (16) zugewandt einen größeren Abstand zueinander haben als dem zweiten Ende (20) des Halteelementes (16) zugewandt.

5. Haltevorrichtung nach einem der Ansprüche 3 oder 4, **dadurch gekennzeichnet, daß** der Axialabschnitt (19) des Halteelementes (16) einen rechteckförmigen Querschnitt mit zwei Querseiten (34) und zwei längeren als diese ausgebildeten Längsseiten (35) hat und durch eine Verschränkung (36) in einen ersten Teilabschnitt (37), der dem ersten Ende (17) zugewandt ist, und in einen zweiten Teilabschnitt (38), der dem zweiten Ende (20) zugewandt ist, unterteilt ist, wobei im ersten Teilabschnitt (37) die Querseiten (34) und im zweiten Teilabschnitt (38) die Längsseiten (35) dem Motorgehäuse (2) und dem Aufnahmegehäuse (9) gegenüberliegen.

6. Haltevorrichtung nach einem der Ansprüche 1 bis 5, **dadurch gekennzeichnet, daß** das Anschlagelement (28) eine dem Motorgehäuse (2) zugewandte Queranschlagfläche (39) hat, die in Richtung vom ersten Ende (17) zum zweiten Ende (20) des Halteelementes (16) verlaufend einen sich verringernden Abstand zum Halteelement (16) hat.

7. Haltevorrichtung nach einem der Ansprüche 1 bis 6, **dadurch gekennzeichnet, daß** das Anschlagelement (28) einstückig am Aufnahmegehäuse (9) ausgebildet ist.

8. Haltevorrichtung nach einem der Ansprüche 1 bis 7, **dadurch gekennzeichnet, daß** das Anschlagelement (28) als ein eigenständiges Teil mit dem Aufnahmegehäuse (9) verbunden ist.

9. Haltevorrichtung nach Anspruch 1, **dadurch gekennzeichnet, daß** das Aufnahmegehäuse (9) topfförmig mit einem ringförmigen Zylinderteil (10) und einem in radialer Richtung verlaufenden Bodenteil (11) ausgebildet ist und das zweite Ende (20) jedes Halteelementes (16) mit dem Bodenteil (11) in Verbindung steht.

10. Haltevorrichtung nach einem der Ansprüche 1 oder 2, **dadurch gekennzeichnet, daß** die ersten Enden (17) der Halteelemente (16) mit einem rohrförmigen Haltering (18) verbunden sind, der das Motorgehäuse (2) umgreift und an dem Motorgehäuse (2) fixierbar ist.

11. Haltevorrichtung nach Anspruch 9, **dadurch gekennzeichnet, daß** die zweiten Enden (20) der Halteelemente (16) mit einer Haltescheibe (21) verbunden sind, die sich parallel zum Bodenteil (11) des Aufnahmegehäuses (9) erstreckt und an dem Bodenteil (11) fixierbar ist.

12. Haltevorrichtung nach Anspruch 10, **dadurch gekennzeichnet, daß** die Halteelemente (16) einstückig mit dem Haltering (18) aus Kunststoff gefertigt sind.

13. Haltevorrichtung nach einem der Ansprüche 11 oder 12, **dadurch gekennzeichnet, daß** die Halteelemente (16) einstückig mit der Haltescheibe (21) aus Kunststoff gefertigt sind.

## Claims

1. Retaining device for an electric motor, in particular an electric motor for a fan, having a receiving housing (9) which has a receiving opening (8) into which a motor housing (2) of the electric motor (1), which housing runs coaxially with an axis of rotation (5) of the motor, at least partially protrudes at a radial distance from the receiving housing (9), and having at least three resilient retaining elements (16) which are arranged at a distance from one another and in each case have a first end (17) and a second end (20), the retaining elements (16) being connected by their first ends (17) to the motor housing (2) and by their second ends (20) to the receiving housing (9) and permitting a vibratory movement of the electric motor (1) relative to the receiving housing (9), **characterized in that** for each retaining element (16) on the receiving housing (9) there is arranged, in the region of the retaining element (16), a stop element (28) which limits the amplitude of a vibratory movement of the electric motor (1) relative to the receiving housing (9).

2. Retaining device according to Claim 1, **characterized in that** the stop element (28) has two mutually facing stop surfaces (29) which, in a clockwise or anticlockwise direction of rotation, limit a torsional movement of the electric motor (1).

3. Retaining device according to Claim 2, **characterized in that** the retaining elements (16) have, between the first end (17) and the second end (20), at least one axial section (19) which runs in the direction of the axis of rotation (5) of the motor, and the stop surfaces (29) run in such a manner that when there is a torsional movement, a first section (30) of the axial section (19), which first section faces the first end (17) of the retaining element (16), comes into contact against the stop surface (19) at a greater amplitude than a second section (31) of the axial section (19), which second section faces the second end (20).

4. Retaining device according to Claim 3, **characterized in that** the two mutually facing stop surfaces (29) of the stop element (28) run in a curved manner such that they are at a greater distance apart when facing the first end (17) of the retaining element (16) than when facing the second end (20) of the retaining element (16).

5. Retaining device according to either of Claims 3 and 4, **characterized in that** the axial section (19) of the retaining element (16) has a rectangular cross section with two transverse sides (34) and two longitudinal sides (35), which are designed to be longer than the latter, and is divided by means of a fold (36) into a first subsection (37) which faces the first end (17), and into a second subsection (38) which faces the second end (20), the transverse sides (34) in the first subsection (37) and the longitudinal sides (35) in the second subsection (38) lying opposite the motor housing (2) and the receiving housing (9).

6. Retaining device according to one of Claims 1 to 5, **characterized in that** the stop element (28) has a transverse stop surface (39) which faces the motor housing (2) and, running in the direction from the first end (17) to the second end (20) of the retaining element (16), is at a reducing distance from the retaining element (16).

7. Retaining device according to one of Claims 1 to 6, **characterized in that** the stop element (28) is formed integrally on the receiving housing (9).

8. Retaining device according to one of Claims 1 to 7, **characterized in that** the stop element (28) is connected to the receiving housing (9) as an independent part.

9. Retaining device according to Claim 1, **characterized in that** the receiving housing (9) is of cup-shaped design with an annular cylinder part (10) and a base part (11) running in the radial direction, and the second end (20) of each retaining element (16) is connected to the base part (11).

10. Retaining device according to either of Claims 1 and 2, **characterized in that** the first ends (17) of the retaining elements (16) are connected to a tubular retaining ring (18) which engages around the motor housing (2) and can be fixed on the motor housing (2).

11. Retaining device according to Claim 9, **characterized in that** the second ends (20) of the retaining elements (16) are connected to a retaining disc (21) which extends parallel to the base part (11) of the receiving housing (9) and can be fixed on the base part (11).

12. Retaining device according to Claim 10, **characterized in that** the retaining elements (16) are manufactured integrally with the retaining ring (18) from plastic.

13. Retaining device according to either of Claims 11 and 12, **characterized in that** the retaining elements (16) are manufactured integrally with the retaining disc (21) from plastic.

## Revendications

1. Dispositif de fixation d'un moteur électrique, notamment d'un moteur électrique d'une machine soufflante ou ventilateur, comportant un boîtier de réception (9) avec un logement (8) dans lequel pénètre au moins partiellement un boîtier de moteur (2) coaxial à l'axe (5) de rotation du moteur électrique (1), en laissant une distance radiale par rapport au boîtier de réception (9), et au moins trois éléments de fixation (16) élastiques comme des ressorts, écartés les uns des autres, et ayant chaque fois une première extrémité (17) et une seconde extrémité (20), les éléments de fixation (16) étant reliés par leur première extrémité (17) au boîtier (2) du moteur et par leur seconde extrémité (20) au boîtier de réception (9), en autorisant un mouvement d'oscillation du moteur électrique (1) par rapport au boîtier de réception (9),
**caractérisé en ce que**
pour chaque élément de fixation (16), le boîtier de réception (9) comporte un élément de butée (18) au niveau de l'élément de fixation (16) pour limiter l'amplitude d'un mouvement oscillant du moteur électrique (1) par rapport au boîtier de réception (9).

2. Dispositif de fixation selon la revendication 1,
**caractérisé en ce que**
l'élément de butée (28) comporte deux surfaces de butée (29) opposées l'une à l'autre, et qui limitent le mouvement de torsion du moteur électrique (1) dans le sens de rotation des aiguilles d'une montre ou dans le sens opposé.

3. Dispositif de fixation selon la revendication 2,
**caractérisé en ce que**
les éléments de fixation (16) ont au moins un segment axial (19) entre la première extrémité (17) et la seconde extrémité (20) qui est dirigé dans la direction de l'axe de rotation (5) du moteur et les surfaces de butée (29) sont dirigées de façon que pour un mouvement de torsion, un premier segment (30) du segment axial (19) tourne vers la première extrémité (17) de l'élément de fixation (16) arrive en appui contre la surface de butée (29) pour une amplitude importante avant le second segment (31) du segment axial (19) à la seconde extrémité (20).

4. Dispositif de fixation selon la revendication 3,
**caractérisé en ce que**
les deux surfaces de butée (29) de l'élément de butée (28). tournées l'une vers l'autre sont cintrées de façon que du côté de la première extrémité (17) de l'élément de fixation (16), elles sont plus éloignées l'une de l'autre que du côte tourne vers la seconde extrémité (20) de l'élément de fixation (16).

5. Dispositif de fixation selon l'une des revendications 3 ou 4,
**caractérisé en ce que**
le segment axial (19) de l'élément de fixation (16) a une section rectangulaire à deux petits côtés (34) et deux grands côtés (35) plus longs, et est subdivisé par une torsion (36) en un premier segment (37) tourné vers la première extrémité (17) et un second segment (38) tourné vers la seconde extrémité (20), et dans le premier segment (37), les petits côtés (34) sont tournes vers le boîtier (2) du moteur et vers le boîtier de réception (9) alors que dans le second segment (38), il s'agit des grands côté (35).

6. Dispositif de fixation selon l'une quelconque des revendications 1 à 5,
**caractérisé en ce que**
l'élément de butée (28) comporte une surface de butée transversale (39) tournée vers le boîtier (2) du moteur et dont la distance par rapport à l'élément de fixation (16) diminue dans la direction de la première extrémité (17) vers la seconde extrémité (20) de l'élément de fixation (16).

7. Dispositif de fixation selon l'une quelconque des revendications 1 à 6,
**caractérisé en ce que**
l'élément de butée (28) est réalisée en une seule piêce avec le boîtier de réception (9).

8. Dispositif de fixation selon l'une quelconque des revendications 1 à 7,
**caractérisé en ce que**
l'élément de butée (28) est une pièce indépendante reliée au boîtier de réception (9).

9. Dispositif de fixation selon la revendication 1,
**caractérisé en ce que**
le boîtier de réception (9) est en forme de pot avec une partie cylindrique annulaire (10) et un fond (11) dirigé radialement et la seconde extrémité de chaque élément de fixation (16) est reliée au fond (11).

10. Dispositif de fixation selon l'une des revendications 1 ou 2,
**caractérisé en ce que**
la première extrémité (17) des éléments de fixation (16) est reliée à un anneau de fixation tubulaire (18) qui entoure le boîtier (2) du moteur en étant fixé à celui-ci.

11. Dispositif de fixation selon la revendication 9,
**caractérisé en ce que**
la seconde extrémité (20) des éléments de fixation (16) est reliée à un disque de fixation (21) qui s'étend parallèlement au fond (11) du boîtier de réception (9) en étant fixé au fond (11).

12. Dispositif de fixation selon la revendication 10,
**caractérisé en ce que**
les éléments de fixation (16) font corps avec l'anneau de fixation (18) et sont réalisés en matière plastique.

13. Dispositif de fixation selon l'une des revendications 11 ou 12,
**caractérisé en ce que**
les éléments de fixation (16) sont réalisés en une seule pièce avec la rondelle de fixation (21) en matière plastique.
